# EUROPEAN PATENT SPECIFICATION

(11) **EP 4 579 710 B1**
(45) Date of publication and mention of the grant of the patent: **18.03.2026**
(21) Application number: 24202617.7
(22) Date of filing: 25.09.2024
(51) Int. Cl.: H01H 31/00, H01H 31/32, H01H 33/12, H01H 33/666, H01H 1/38, H01H 33/56

(54) **THREE-POSITION SWITCH AND GAS BOX USING SWITCH**
DREISTELLUNGSSCHALTER UND GASKASTEN MIT EINEM SOLCHEN SCHALTER
COMMUTATEUR À TROIS POSITIONS ET BOÎTE À GAZ UTILISANT LE COMMUTATEUR

(30) Priority: 28.12.2023 CN 202311834935
(43) Date of publication of application: 02.07.2025
(73) Proprietor: Henan Pinggao Electric Co., Ltd., Pingdingshan, Henan 467001 (CN); Shanghai Pinggao Tianling Switchgear Co., Ltd., Shanghai 201808 (CN); China Electrical Equipment Group Co., Ltd., Shanghai 200040 (CN)
(72) Inventor: Lou, Yuantong, Pingdingshan, Henan, 467001 (CN); Zhu, Zhihao, Pingdingshan, Henan, 467001 (CN); Wang, Haiyan, Pingdingshan, Henan, 467001 (CN); Zhu, Yanqing, Pingdingshan, Henan, 467001 (CN); Lu, Jian, Pingdingshan, Henan, 467001 (CN); Feng, Xiangwei, Pingdingshan, Henan, 467001 (CN); Fei, Xiang, Pingdingshan, Henan, 467001 (CN); Zhang, Hao, Pingdingshan, Henan, 467001 (CN); Liu, Zhiyang, Pingdingshan, Henan, 467001 (CN); Zhai, Tingting, Pingdingshan, Henan, 467001 (CN); Zhang, Jiafei, Jiading District, Shanghai, 201808 (CN); Pan, Jian, Jiading District, Shanghai, 201808 (CN); Qian, Lixiao, Jiading District, Shanghai, 201808 (CN); Cao, Yefei, Jiading District, Shanghai, 201808 (CN)
(74) Representative: Gulde & Partner

(56) References cited:
- EP-B1- 1 082 791
- EP-B1- 2 446 453
- CN-A- 102 339 684
- CN-A- 109 412 067

## Description

### TECHNICAL FIELD

The present invention relates to the field of manufacturing medium-voltage ring network distribution switch devices, and in particular, to a three-position switch and a gas box using the switch.

### BACKGROUND

In a conventional SF₆ gas-insulated circuit breaker cabinet solution, a three-position switch and a vacuum circuit breaker switch on a line side are generally used. The three-position switch needs to have the ability of closing a grounding short-circuit current. An SF₆ gas-insulated three-position switch is mostly a rotary-blade three-position switch. A moving isolating contact and a moving grounding contact share a moving contact. In other words, a moving contact blade needs to not only enable a current to flow through a main electrically-conductive loop, but also realize closing of the grounding short-circuit current. The SF₆ is a non-environmentally-friendly greenhouse gas, and is gradually replaced by an environmentally-friendly gas. Arc extinguishing performance and insulating performance of the environmentally-friendly gas are much lower than those of the SF₆ gas. Therefore, if the SF₆ gas-insulated three-position switch solution is directly used, a long pre-breakdown time and a long arc time are caused when the grounding short-circuit current is closed. After the grounding short-circuit current is closed, the contact is seriously ablated, resistance of a main circuit is often greater than 20%, and a flow capacity cannot meet a requirement. Moreover, the moving contact is ablated by an arc after closing the grounding short-circuit current, causing electric field distortion and affecting insulating between clearances. Currently, a line-side three-position environmentally-friendly circuit breaker cabinet solution has two main technical routes. One is to use an SF₆ gas-insulated rotary-blade three-position switch solution, which is to improve closing performance by taking measures such as increasing a length of a moving contact blade and increasing a closing speed. The other is to connect a vacuum arc-extinguishing chamber in series on a side of a fixed grounding contact, and close the grounding short-circuit current through the arc-extinguishing chamber.

The invention patent CN106486913A discloses an "environmentally-friendly gas-insulated ring main unit", including a vacuum circuit breaker switch with horizontally arranged poles, a rotary-blade three-position switch, and the like. To meet the insulating performance, a moving contact blade of the three-position switch is lengthened, and a clearance spacing is increased. In addition, the moving contact blade is insulated and coated, but an end portion of the moving contact blade needs to perform electrical contact and is not completely covered. In the solution, although the insulating performance under an environmentally-friendly gas medium is satisfied by taking measures such as increasing an insulating clearance and using insulating and coating, the end portion of the moving contact is ablated by the arc after closing the grounding short-circuit current, inevitably producing defects such as burrs, causing electric field distortion, and affecting the insulating performance. A long pre-breakdown time and a long arc time are caused when the grounding short-circuit current is closed. After the grounding short-circuit current is closed, the contact is seriously ablated, the resistance of the main circuit is often greater than 20%, and the flow capacity cannot meet the requirement.

The invention patent with a publication number CN108321001A discloses a "three-position switch", including a fixed isolating contact connected to a vacuum arc-extinguishing chamber of a circuit breaker, a fixed grounding contact connected to a grounding vacuum arc-extinguishing chamber, an isolation breaker, and the like. During the grounding operation, the isolation breaker first contacts the fixed grounding contact, and then the grounding vacuum arc-extinguishing chamber is closed to close the grounding short-circuit current.

EP1082791B1, EP2446453B1 and CN102339684A disclose further three-position switches according to the prior art.

In the solution, the isolation breaker contacts the fixed grounding contact at an isolation position, and a vacuum clearance is used between the isolation breaker and the ground instead of a gas clearance, which poses a potential safety hazard. Structurally, on the one hand, a vacuum arc-extinguishing chamber is added to a grounding circuit to close the grounding short-circuit current, and on the other hand, a transmission device is added to a three-position structure to drive a grounding arc-extinguishing chamber to close. The solution has a complex structure and high costs.

Therefore, the present invention designs a brand new three-position switch and a gas box using the switch.

### SUMMARY

To overcome the foregoing defects of the prior art, an objective of the present invention is to provide a three-position switch and a gas box using the switch.

To achieve the objective of the present invention, the technical solution is as follows.

A three-position switch includes:
a three-position insulating support, where two ends of the three-position insulating support are fixed to a front plate and a rear plate of a switch frame,
the three-position switch is provided with an isolating support seat and a grounding support seat thereon, and the isolating support seat is electrically and non-coaxially connected to the grounding support seat through a connecting bar;
a first insulating guide sleeve is embedded in the isolating support seat;
a moving isolating contact extends into the isolating support seat and moves along an axis of the isolating support seat, and is in conductive contact with the isolating support seat through a first spring contact finger, and the remaining part is insulated and isolated from the isolating support seat through the first insulating guide sleeve;
a second insulating guide sleeve is embedded in the grounding support seat, a moving grounding contact extends into the grounding support seat and moves along an axis of the grounding support seat, and is in conductive contact with the grounding support seat through a second spring contact finger, and the remaining part is insulated and isolated from the grounding support seat through the second insulating guide sleeve;
the axis of the isolating support seat of the three-position switch is arranged to coincide with an axis center of a fixed isolating contact seat, and an insulating distance is provided between the isolating support seat of the three-position switch and the fixed isolating contact seat;
two ends of a three-position insulating spindle are supported and mounted on the front plate and the rear plate of the switch frame, and rotatable along an axis of the switch frame, and the axis of the switch frame passes through a point of intersection of the axes of the isolating support seat and the grounding support seat;
an insulating driving crank arm is fixed to the three-position insulating spindle and rotates with the three-position insulating spindle, and the insulating driving crank arm is respectively connected to the moving isolating contact or the moving grounding contact through an insulating connecting rod to form a crank slider structure;
a fixed grounding contact is fixed to the switch frame, three-phase fixed grounding contacts are electrically connected through a grounding bus bar, the fixed grounding contact is coaxial with the grounding support seat, a grounding shielding cover is coaxially arranged outside the fixed grounding contact, and a sufficient insulating clearance is left between the grounding shielding cover and the grounding support seat as a ground clearance; and
a linear motion of the moving grounding contact and the moving isolating contact is implemented through rotation of the three-position insulating spindle, and switching of actions such as closing, opening, and grounding of the three-position switch is implemented.

In a preferred embodiment of the present invention, the grounding support seat of the three-position switch is electrically connected to an ingoing/outgoing line bushing through a branch bus.

In a preferred embodiment of the present invention, the insulating driving crank arm forms a first crank slider structure with the moving isolating contact through a first insulating connecting rod; and
the insulating driving crank arm forms a second crank slider structure with the moving grounding contact through a second insulating connecting rod.

In a preferred embodiment of the present invention, the moving grounding contact adopts a petal-like self-elastic contact, with a reduced-diameter end. During closing for grounding, the fixed grounding contact is inserted into the moving grounding contact, and a petal-like contact finger of the moving grounding contact deforms outward to generate a contact pressure to ensure reliable contact.

In a preferred embodiment of the present invention, an end portion of the isolating support seat close to the first spring contact finger is provided with an arc surface for a uniform electric field, and a first notch for the first spring contact finger to be mounted is provided.

In a preferred embodiment of the present invention, an end portion of the grounding support seat close to the second spring contact finger is provided with an arc surface for a uniform electric field, and a second notch for the second spring contact finger to be mounted is provided.

In a preferred embodiment of the present invention, an end portion of the grounding shielding cover toward the grounding support seat is provided with an arc surface for a uniform electric field.

In a preferred embodiment of the present invention, an acute angle is formed between the axis of the isolating support seat and the axis of the grounding support seat. The acute angle is an angle greater than 0° and less than 90° (a right angle).

A gas box is provided. The three-position switch is arranged in the gas box, and the three-position switch is fixed to a front plate of the gas box and arranged exactly below a vacuum circuit breaker.

An axis of the isolating support seat of the three-position switch coincides with an axis center of a fixed isolating contact seat.

A top portion of the gas box is provided with the vacuum circuit breaker and a connected side expansion bus bushing, a moving end of a vacuum arc-extinguishing chamber is electrically connected to the side expansion bus bushing through a flexible connection, and the fixed isolating contact seat is fixed to a fixed end of the vacuum arc-extinguishing chamber; and
an inside of the fixed isolating contact seat is connected to the fixed isolating contact by mounting a fixed isolating contact seat spring contact finger.

Beneficial effects of the present invention are as follows.

An innovative fast direct-acting three-position switch is used, so that a moving grounding contact is separated from a moving isolating contact, and contact ablation after closing for grounding does not affect flow of a main circuit, thereby improving closing capacity. During opening, the moving isolating contact and the moving grounding contact are respectively shielded by a shielding cover, and arc ablation of the contact does not affect insulating performance of a clearance. A three-phase moving isolating contact and a three-phase moving grounding contact are simultaneously driven by a transmission shaft, thereby ensuring synchronization of three phases.

### BRIEF DESCRIPTION OF THE DRAWINGS

FIG. 1 is a schematic structural diagram of an Embodiment of a three-position switch and a gas box using the switch according to the present invention.
FIG. 2 is a schematic structural diagram of a three-position switch according to the present invention.
FIG. 3 is a three-dimensional schematic diagram of a three-position switch according to the present invention.
FIG. 4 is a three-dimensional schematic diagram of a three-position switch according to the present invention.
FIG. 5 is a schematic diagram of an open state of a three-position switch according to the present invention.
FIG. 6 is a schematic diagram of a closed state of a three-position switch according to the present invention.
FIG. 7 is a schematic diagram of a grounding state of a three-position switch according to the present invention.

### DETAILED DESCRIPTION

In order to make the objectives, technical solutions, and advantages of the invention clearer and more comprehensible, the invention is further described in detail in combination with the drawings and embodiments. However, it should be understood that the specific embodiments described herein serve to explain the invention merely and are not used to limit the invention. In addition, the description of common structure and technology are omitted herein, to avoid unnecessary concepts to confuse the invention.

In the description of the present invention, it should be noted that the orientation or position relation indicated by the terms "above", "below", "inside", "outside", "top/bottom end" are based on the orientation or position relation indicated on drawings, which are merely used for convenience and simplicity of description of the present invention, rather than indicating or implying that the referred device or component should necessarily have a specific orientation, construct and operate in a specific orientation. Therefore, the terms cannot be construed as a limitation on the present invention. In addition, the terms "first" and "second" are only used to describe the objective, and cannot be understood as indicating or implying relatively significance.

Reference numerals in the figures of the present invention are as follows.

1. Vacuum circuit breaker; 2. Side expansion bus bushing; 3. Gas box; 4. Three-position switch; 5. Grounding connecting bar; 6. Branch bus; 7. Ingoing/outgoing line bushing; 101. Fixed isolating contact seat; 102. Fixed isolating contact seat spring contact finger; 103. Flexible connection; 104. Vacuum arc-extinguishing chamber; 401. Isolating support seat; 402. First spring contact finger; 403. Moving isolating contact; 404. First insulating guide sleeve; 405. Insulating connecting rod; 406. Three-position insulating spindle; 407. Insulating driving crank arm; 408. Switch frame; 409. Three-position insulating support; 410. Connecting bar; 411. Grounding support seat; 412. Moving grounding contact; 413. Grounding shielding cover; 414. Fixed grounding contact; 415. Grounding bus bar; 416. Second insulating guide sleeve; 417. Second spring contact finger.

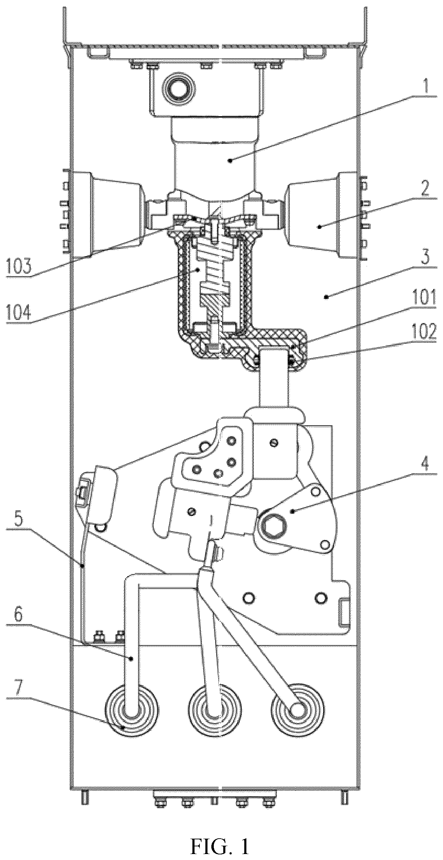

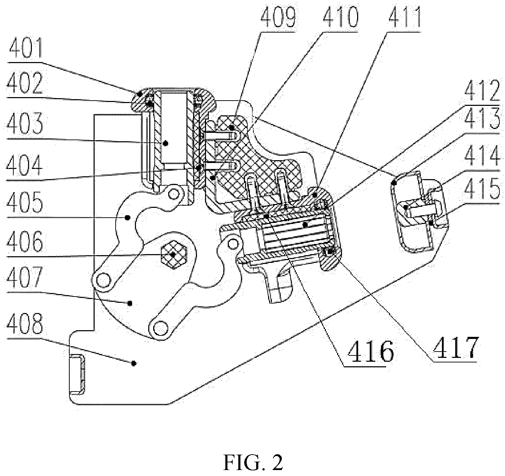

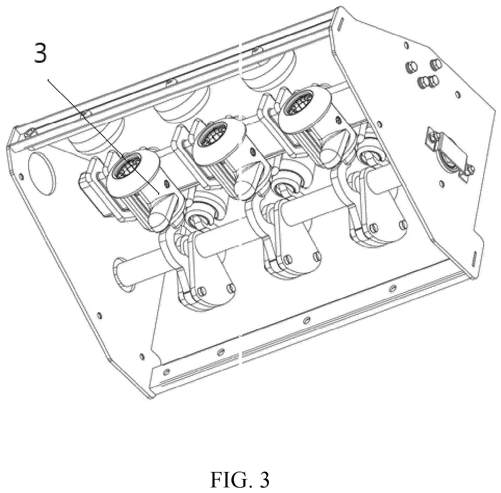

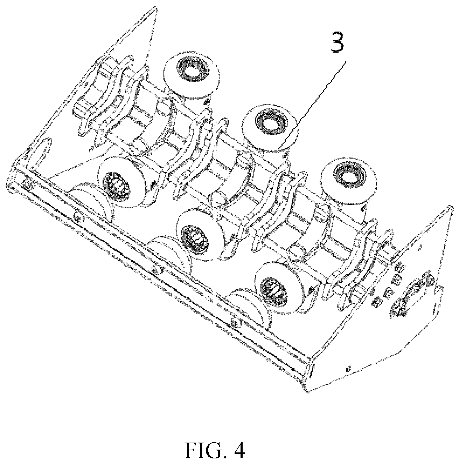

A three-position switch shown in FIG. 1 to FIG. 4 includes a three-position insulating support 409. Two ends of the three-position insulating support 409 are fixed to a front plate and a rear plate of a switch frame 408.

The three-position switch 4 is provided with an isolating support seat 401 and a grounding support seat 411 thereon, and the isolating support seat 401 is electrically and non-coaxially connected to the grounding support seat 411 through a connecting bar 410.

An acute angle is formed between the axis of the isolating support seat 401 and the axis of the grounding support seat 411. The acute angle is an angle greater than 0° and less than 90° (a right angle).

A first insulating guide sleeve 404 is embedded in the isolating support seat 401. The moving isolating contact 403 extends into the isolating support seat 401 and moves along an axis of the isolating support seat 401, and is in electrical contact with the isolating support seat 401 through a first spring contact finger 402, and the remaining part is insulated and isolated from the isolating support seat 401 through the first insulating guide sleeve 404.

An end portion of the isolating support seat 401 close to the first spring contact finger 402 is provided with an arc surface for a uniform electric field, and a first notch for the first spring contact finger 402 to be mounted is provided.

A second insulating guide sleeve 416 is embedded in the grounding support seat 411, a moving grounding contact 412 extends into the grounding support seat 411 and moves along an axis of the grounding support seat 411, and is in conductive contact with the grounding support seat 411 through a second spring contact finger 417, and the remaining part is insulated and isolated from the grounding support seat 411 through the second insulating guide sleeve 416.

The moving grounding contact 412 adopts a petal-like self-elastic contact, with a reduced-diameter end. During closing for grounding, the fixed grounding contact 414 is inserted into the moving grounding contact 412, and a petal-like contact finger of the moving grounding contact 412 deforms outward to generate a contact pressure to ensure reliable contact.

An end portion of the grounding support seat 411 close to the second spring contact finger 417 is provided with an arc surface for a uniform electric field, and a second notch for the second spring contact finger 417 to be mounted is provided.

The axis of the isolating support seat 401 of the three-position switch 4 is arranged to coincide with an axis center of a fixed isolating contact seat 101, and an insulating distance is provided between the isolating support seat 401 of the three-position switch 4 and the fixed isolating contact seat 101.

Two ends of a three-position insulating spindle 406 are supported and mounted on the front plate and the rear plate of the switch frame 408, and rotatable along an axis of the switch frame 408, and the axis of the switch frame 408 passes through a point of intersection of the axes of the isolating support seat 401 and the grounding support seat 411.

The grounding support seat 411 of the three-position switch 4 is electrically connected to an ingoing/outgoing line bushing 7 through a branch bus 6.

An insulating driving crank arm 407 is fixed to the three-position insulating spindle 406 and rotates with the three-position insulating spindle 406, and the insulating driving crank arm 407 is respectively connected to the moving isolating contact 403 or the moving grounding contact 412 through an insulating connecting rod 405 to form a crank slider structure. The insulating driving crank arm 407 forms a first crank slider structure with the moving isolating contact 403 through a first insulating connecting rod.

The insulating driving crank arm 407 forms a second crank slider structure with the moving grounding contact 412 through a second insulating connecting rod.

A fixed grounding contact 414 is fixed to the switch frame 408, and three-phase fixed grounding contacts 414 are electrically connected through a grounding bus bar 415. The fixed grounding contact 414 is coaxial with the grounding support seat 411, a grounding shielding cover 413 is coaxially arranged outside the fixed grounding contact 414, and a sufficient insulating clearance is left between the grounding shielding cover 413 and the grounding support seat 411 as a ground clearance. An end portion of the grounding shielding cover 413 toward the grounding support seat 411 is provided with an arc surface for a uniform electric field. The insulating between the ground clearances is insulating between the grounding support seat 411 and the grounding shielding cover 413.

A linear motion of the moving grounding contact 412 and the moving isolating contact 403 is implemented through rotation of the three-position insulating spindle 406, and switching of actions such as closing, opening, and grounding of the three-position switch 4 is implemented.

The three-position switch 4 is arranged in a gas box 3, and the three-position switch 4 is fixed to a front plate of the gas box 3 and arranged exactly below a vacuum circuit breaker 1.

The axis of the isolating support seat 401 of the three-position switch 4 coincides with the axis center of a fixed isolating contact seat 101.

A top portion of the gas box 3 is provided with the vacuum circuit breaker 1 and a connected side expansion bus bushing 2, a moving end of a vacuum arc-extinguishing chamber 104 is electrically connected to the side expansion bus bushing 2 through a flexible connection 103, and the fixed isolating contact seat 101 is fixed to a fixed end of the vacuum arc-extinguishing chamber 104. An inside of the fixed isolating contact seat 101 is connected to the fixed isolating contact by mounting a fixed isolating contact seat spring contact finger 102.

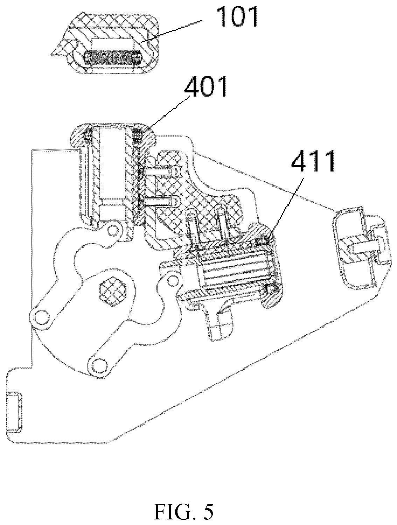

The operating principle of the present invention is further described with reference to FIG. 5 to FIG. 7.

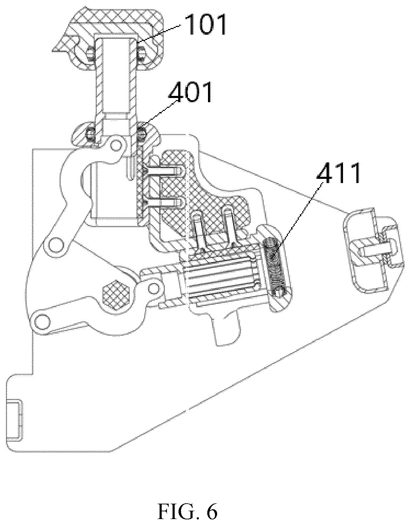

Closing operation: A three-position operating mechanism drives the insulating driving crank arm 407 to rotate clockwise through a three-position insulating spindle 406, an insulating connecting rod 405 simultaneously drives a moving isolating contact 403 to move upward along the axis of an isolating support seat 401 until the moving isolating contact 403 is inserted into a fixed isolating contact seat 101, and the insulating connecting rod 405 simultaneously drives the moving grounding contact 412 to move a short distance to the left along an axis of a grounding support seat 411. A closed state is shown in FIG. 6. In this case, the moving isolating contact 403 is in conductive contact with the fixed isolating contact seat 101 through the fixed isolating contact seat spring contact finger 102. The moving isolating contact 403 is in conductive contact with the isolating support seat 401 through the first spring contact finger 402. An end portion of the moving grounding contact 412 is still hidden in the grounding support seat 411 and shielded by an electric field thereof.

Opening operation: A three-position operating mechanism drives the insulating driving crank arm 407 to rotate counterclockwise through the three-position insulating spindle 406, the insulating connecting rod 405 simultaneously drives the moving isolating contact 403 to move downward along the axis of the isolating support seat 401 until the moving isolating contact 403 is completely retracted into the isolating support seat 401 and shielded by the electric field thereof, and the insulating connecting rod 405 simultaneously drives the moving grounding contact 412 to move a short distance to the right along the axis of the grounding support seat 411. The end portion of the moving grounding contact 412 is always hidden in the grounding support seat 411 and shielded by the electric field thereof. An opened state is shown in FIG. 5.

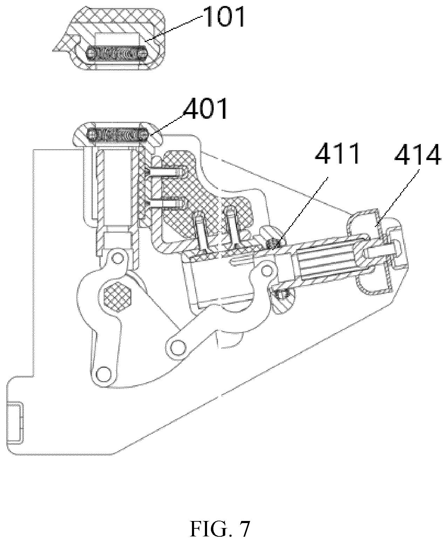

Grounding operation: The three-station operating mechanism drives the insulating driving crank arm 407 to rotate counterclockwise through the three-position insulating spindle 406, the insulating connecting rod 405 simultaneously drives the moving grounding contact 412 to move to the right along the axis of the grounding support seat 411 until the fixed grounding contact 414 is inserted into the moving grounding contact 412, and the insulating connecting rod 405 simultaneously drives the moving isolating contact 403 to move a short distance downward along the axis of the isolating support seat 401. The end portion of the moving isolating contact 403 is always hidden in the isolating support seat 401 and shielded by the electric field thereof. A grounding state is shown in FIG. 7. In this case, the moving grounding contact 412 is in conductive contact with the grounding support seat 411 through the first spring contact finger 402, and the moving grounding contact 412 is in conductive contact with the fixed grounding contact 414 through a petal-like contact finger.

The basic principle, main features and advantages of the present invention are indicated and described above.

Those skilled in the art should understand that the present invention is not limited by the above-mentioned embodiments. The above-mentioned embodiments and description only indicate the principle of the present invention. The protection scope of the present invention should be subject to the appended claims.

## Claims

1. A three-position switch (4) comprising:
a three-position insulating support (409) wherein two ends of the three-position insulating support are fixed to a front plate and a rear plate of a switch frame (408),
the three-position switch is provided with an isolating support seat (401) and a grounding support seat (411) thereon, and the isolating support seat is electrically and non-coaxially connected to the grounding support seat through a connecting bar (410), a first insulating guide sleeve (404) is embedded in the isolating support seat;
a moving isolating contact (403) extends into the isolating support seat and moves along an axis of the isolating support seat, and is in conductive contact with the isolating support seat through a first spring contact finger (402), and the remaining part is insulated and isolated from the isolating support seat through the first insulating guide sleeve;
a second insulating guide sleeve (416) is embedded in the grounding support seat, a moving grounding contact (414) extends into the grounding support seat and moves along an axis of the grounding support seat, and is in conductive contact with the grounding support seat through a second spring contact finger (417), and the remaining part is insulated and isolated from the grounding support seat through the second insulating guide sleeve;
the axis of the isolating support seat of the three-position switch is arranged to coincide with an axis center of a fixed isolating contact seat (101), and an insulating distance is provided between the isolating support seat of the three-position switch and the fixed isolating contact seat;
two ends of a three-position insulating spindle (406) are supported and mounted on the front plate and the rear plate of the switch frame (408), and rotatable along an axis of the switch frame, and the axis of the switch frame passes through a point of intersection of the axes of the isolating support seat and the grounding support seat;
an insulating driving crank arm (407) is fixed to the three-position insulating spindle and rotates with the three-position insulating spindle, and the insulating driving crank arm is respectively connected to the moving isolating contact or the moving grounding contact through an insulating connecting rod (405) to form a crank slider structure;
a fixed grounding contact is fixed to the switch frame, three-phase fixed grounding contacts are electrically connected through a grounding bus bar (415), the fixed grounding contact is coaxial with the grounding support seat, a grounding shielding cover (413) is coaxially arranged outside the fixed grounding contact, and a sufficient insulating clearance is left between the grounding shielding cover and the grounding support seat as a ground clearance; and
a linear motion of the moving grounding contact and the moving isolating contact is implemented through rotation of the three-position insulating spindle, and switching of actions such as closing, opening, and grounding of the three-position switch is implemented.

2. The three-position switch according to claim 1, wherein the grounding support seat of the three-position switch is electrically connected to an ingoing/outgoing line bushing (7) through a branch bus (6).

3. The three-position switch according to claim 1, wherein the insulating driving crank arm forms a first crank slider structure with the moving isolating contact through a first insulating connecting rod; and
the insulating driving crank arm forms a second crank slider structure with the moving grounding contact through a second insulating connecting rod.

4. The three-position switch according to claim 1, wherein the moving grounding contact adopts a petal-like self-elastic contact, with a reduced-diameter end, and during closing for grounding, the fixed grounding contact is inserted into the moving grounding contact, and a petal-like contact finger of the moving grounding contact deforms outward to generate a contact pressure to ensure reliable contact.

5. The three-position switch according to claim 1, wherein an end portion of the isolating support seat close to the first spring contact finger is provided with an arc surface for a uniform electric field, and a first notch for the first spring contact finger to be mounted is provided.

6. The three-position switch according to claim 1, wherein an end portion of the grounding support seat close to the second spring contact finger is provided with an arc surface for a uniform electric field, and a second notch for the second spring contact finger to be mounted is provided.

7. The three-position switch according to claim 1, wherein an end portion of the grounding shielding cover toward the grounding support seat is provided with an arc surface for a uniform electric field.

8. The three-position switch according to claim 1, wherein an acute angle is formed between the axis of the isolating support seat and the axis of the grounding support seat.

9. A gas box, wherein the three-position switch according to any of claims 1 to 8 is arranged in the gas box (3), and the three-position switch is fixed to a front plate of the gas box and arranged exactly below a vacuum circuit breaker (1); and
the axis of the isolating support seat of the three-position switch coincides with the axis center of a fixed isolating contact seat.

10. The gas box according to claim 9, wherein a top portion of the gas box is provided with the vacuum circuit breaker and a connected side expansion bus bushing (2), a moving end of a vacuum arc-extinguishing chamber (104) is electrically connected to the side expansion bus bushing through a flexible connection (103), and the fixed isolating contact seat is fixed to a fixed end of the vacuum arc-extinguishing chamber; and
an inside of the fixed isolating contact seat is connected to the fixed isolating contact by mounting a fixed isolating contact seat spring contact finger (102).

## Patentansprüche

1. Dreistufenschalter (4), umfassend:
einen Dreistufen-Isolierhalter (409), wobei zwei Enden des Dreistufen-Isolierhalters an einer Frontplatte und einer Rückplatte eines Schalterrahmens (408) befestigt sind,
der Dreistufenschalter mit einem Isolierstützsitz (401) und einem Erdungsstützsitz (411) darauf versehen ist und der Isolierstützsitz über eine Verbindungsstange (410) elektrisch und nicht koaxial mit dem Erdungsstützsitz verbunden ist,
eine erste Isolierführungshülse (404) in den Isolierstützsitz eingebettet ist;
ein beweglicher Isolierkontakt (403) sich in den Isolierstützsitz hinein erstreckt, sich entlang einer Achse des Isolierstützsitzes bewegt und über einen ersten Federkontaktfinger (402) in leitendem Kontakt mit dem Isolierstützsitz steht,
und der verbleibende Teil über die erste Isolierführungshülse vom Isolierstützsitz isoliert und getrennt ist;
eine zweite Isolierführungshülse (416) in den Erdungsstützsitz eingebettet ist, ein beweglicher Erdungskontakt (414) sich in den Erdungsstützsitz hinein erstreckt, sich entlang einer Achse des Erdungsstützsitzes bewegt und über einen zweiten Federkontaktfinger (417) in leitendem Kontakt mit dem Erdungsstützsitz steht,
und der verbleibende Teil über die zweite Isolierführungshülse vom Erdungsstützsitz isoliert und getrennt ist;
die Achse des Isolierstützsitzes des Dreistufenschalters so angeordnet ist, dass sie mit einer Achsenmitte eines festen Isolierkontaktsitzes (101) zusammenfällt,
und zwischen dem Isolierstützsitz des Dreistufenschalters und dem festen Isolierkontaktsitz ein Isolierabstand vorgesehen ist;
zwei Enden einer Dreistufen-Isolierspindel (406) an der Frontplatte und der Rückplatte des Schalterrahmens (408) gelagert und montiert sind,
und entlang einer Achse des Schalterrahmens gedreht werden können,
und die Achse des Schalterrahmens durch einen Schnittpunkt der Achsen des Isolierstützsitzes und des Erdungsstützsitzes verläuft;
ein isolierender Antriebskurbelarm (407) an der Dreistufen-Isolierspindel befestigt ist und sich mit der Dreistufen-Isolierspindel dreht, und der isolierende Antriebskurbelarm jeweils über eine isolierende Verbindungsstange (405) mit dem beweglichen Isolierkontakt oder dem beweglichen Erdungskontakt verbunden ist, um eine Kurbel-Gleitstruktur zu bilden;
ein fester Erdungskontakt am Schalterrahmen befestigt ist, dreiphasige feste Erdungskontakte über eine Erdungssammelschiene (415) elektrisch verbunden sind,
der feste Erdungskontakt koaxial zum Erdungsstützsitz ist, eine Erdungsabschirmungsabdeckung (413) koaxial außerhalb des festen Erdungskontakts angeordnet ist, und zwischen der Erdungsabschirmungsabdeckung und dem Erdungsstützsitz ein ausreichender Isolationsabstand als Bodenfreiheit gelassen wird; und
eine lineare Bewegung des beweglichen Erdungskontakts und des beweglichen Isolierkontakts durch Drehung der Dreistufen-Isolierspindel realisiert wird, und das Schalten von Aktionen wie Schließen, Öffnen und Erden des Dreistufenschalters realisiert wird.

2. Dreistufenschalter nach Anspruch 1, wobei der Erdungsstützsitz des Dreistufenschalters über eine Abzweigschiene (6) elektrisch mit einer ein-/ausgehenden Leitungsdurchführung (7) verbunden ist.

3. Dreistufenschalter nach Anspruch 1, wobei der isolierende Antriebskurbelarm über eine erste isolierende Verbindungsstange eine erste Kurbel-Gleitstruktur mit dem beweglichen Isolierkontakt bildet; und
der isolierende Antriebskurbelarm über eine zweite isolierende Verbindungsstange eine zweite Kurbel-Gleitstruktur mit dem beweglichen Erdungskontakt bildet.

4. Dreistufenschalter nach Anspruch 1, wobei der bewegliche Erdungskontakt einen blütenblattartigen selbstelastischen Kontakt mit einem Ende mit reduziertem Durchmesser aufnimmt und während des Schließens zur Erdung der feste Erdungskontakt in den beweglichen Erdungskontakt eingeführt wird und sich ein blütenblattartiger Kontaktfinger des beweglichen Erdungskontakts nach außen verformt, um einen Kontaktdruck zu erzeugen, der einen zuverlässigen Kontakt gewährleistet.

5. Dreistufenschalter nach Anspruch 1, wobei ein Endabschnitt des Isolierstützsitzes in der Nähe des ersten Federkontaktfingers mit einer Bogenfläche für ein gleichmäßiges elektrisches Feld versehen ist und eine erste Kerbe für den zu montierenden ersten Federkontaktfinger vorgesehen ist.

6. Dreistufenschalter nach Anspruch 1, wobei ein Endabschnitt des Erdungsstützsitzes in der Nähe des zweiten Federkontaktfingers mit einer Bogenfläche für ein gleichmäßiges elektrisches Feld versehen ist und eine zweite Kerbe für den zu montierenden zweiten Federkontaktfinger vorgesehen ist.

7. Dreistufenschalter nach Anspruch 1, wobei ein Endabschnitt der Erdungsabschirmungsabdeckung in Richtung des Erdungsstützsitzes mit einer Bogenfläche für ein gleichmäßiges elektrisches Feld versehen ist.

8. Dreistufenschalter nach Anspruch 1, wobei zwischen der Achse des Isolierstützsitzes und der Achse des Erdungsstützsitzes ein spitzer Winkel gebildet ist.

9. Gasbox, wobei der Dreistufenschalter nach einem der Ansprüche 1 bis 8 in der Gasbox (3) angeordnet ist,
und der Dreistufenschalter an einer Frontplatte der Gasbox befestigt und genau unterhalb eines Vakuumleistungsschalters (1) angeordnet ist; und
die Achse des Isolierstützsitzes des Dreistufenschalters mit der Achsenmitte eines festen Isolierkontaktsitzes zusammenfällt.

10. Gasbox nach Anspruch 9, wobei ein oberer Abschnitt der Gasbox mit dem Vakuumleistungsschalter und einer angeschlossenen seitlichen Erweiterungsbusbuchse (2) versehen ist, ein bewegliches Ende einer Vakuum-Lichtbogenlöschkammer (104) über eine flexible Verbindung (103) elektrisch mit der seitlichen Erweiterungsbusbuchse verbunden ist,
und der feste Isolierkontaktsitz an einem festen Ende der Vakuum-Lichtbogenlöschkammer befestigt ist; und
ein Inneres des festen Isolierkontaktsitzes mit dem festen Isolierkontakt verbunden ist, indem ein fester Isolierkontaktsitz-Federkontaktfinger (102) montiert ist.

## Revendications

1. Interrupteur à trois positions (4) comprenant :
un support d'isolement à trois positions (409), deux extrémités du support d'isolement à trois positions étant fixées à une plaque avant et à une plaque arrière d'un cadre d'interrupteur (408),
dans lequel, l'interrupteur à trois positions est pourvu d'un siège de support isolant (401) et d'un siège de support de mise à la terre (411) sur celui-ci, et le siège de support isolant est connecté électriquement et non coaxialement au siège de support de mise à la terre par l'intermédiaire d'une barre de connexion (410),
un premier manchon de guidage d'isolement (404) est encastré dans le siège de support isolant ;
un contact isolant mobile (403) s'étend jusqu'à l'intérieur du siège de support isolant et se déplace le long d'un axe du siège de support isolant, et est en contact conducteur avec le siège de support isolant par l'intermédiaire d'un premier doigt de contact à ressort (402),
et la partie restante est séparée et isolée du siège de support isolant par l'intermédiaire du premier manchon de guidage d'isolement ;
un second manchon de guidage d'isolement (416) est encastré dans le siège de support de mise à la terre, un contact mobile de mise à la terre (414) s'étend jusqu'à l'intérieur du siège de support de mise à la terre et se déplace le long d'un axe du siège de support de mise à la terre, et est en contact conducteur avec le siège de support de mise à la terre par l'intermédiaire d'un second doigt de contact à ressort (417),
et la partie restante est séparée et isolée du siège de support de mise à la terre par l'intermédiaire du second manchon de guidage d'isolement ;
l'axe du siège de support isolant de l'interrupteur à trois positions est disposé pour coïncider avec un centre d'axe d'un siège de contact isolant fixe (101),
et une distance d'isolement est prévue entre le siège de support isolant de l'interrupteur à trois positions et le siège de contact isolant fixe ;
deux extrémités d'une broche d'isolement à trois positions (406) sont soutenues et montées sur la plaque avant et la plaque arrière du cadre d'interrupteur (408),
et sont tournantes autour d'un axe du cadre d'interrupteur,
et l'axe du cadre d'interrupteur passe par un point d'intersection des axes du siège de support isolant et du siège de support de mise à la terre ;
un bras de manivelle d'entraînement d'isolement (407) est fixé à la broche d'isolement à trois positions et tourne avec la broche d'isolement à trois positions, et le bras de manivelle d'entraînement d'isolement est relié au contact isolant mobile ou au contact mobile de mise à la terre respectivement par l'intermédiaire d'une tige de liaison d'isolement (405) pour former une structure de manivelle-coulisse ;
un contact fixe de mise à la terre est fixé au cadre d'interrupteur, des contacts fixes triphasés de mise à la terre sont connectés électriquement par l'intermédiaire d'une barre de bus de mise à la terre (415),
le contact fixe de mise à la terre est coaxial avec le siège de support de mise à la terre, un couvercle de blindage de mise à la terre (413) est disposé coaxialement à l'extérieur du contact fixe de mise à la terre, et un dégagement d'isolement suffisant est laissé entre le couvercle de blindage de mise à la terre et le siège de support de mise à la terre comme dégagement de terre ; et
un mouvement linéaire du contact mobile de mise à la terre et du contact isolant mobile est réalisé en faisant tourner la broche d'isolement à trois positions, et une commutation d'actions telles que la fermeture, l'ouverture et la mise à la terre de l'interrupteur à trois positions est réalisée.

2. Interrupteur à trois positions selon la revendication 1, dans lequel le siège de support de mise à la terre de l'interrupteur à trois positions est connecté électriquement à une douille de ligne d'entrée/sortie (7) par l'intermédiaire d'un bus de branche (6).

3. Interrupteur à trois positions selon la revendication 1, dans lequel le bras de manivelle d'entraînement d'isolement forme une première structure de manivelle-coulisse avec le contact isolant mobile par l'intermédiaire d'une première tige de liaison d'isolement ; et
le bras de manivelle d'entraînement d'isolement forme une seconde structure de manivelle-coulisse avec le contact mobile de mise à la terre par l'intermédiaire d'une seconde tige de liaison d'isolement.

4. Interrupteur à trois positions selon la revendication 1, dans lequel le contact mobile de mise à la terre adopte un contact auto-élastique en forme de pétale, avec une extrémité de diamètre réduit, et lors d'une fermeture pour la mise à la terre, le contact fixe de mise à la terre est inséré dans le contact mobile de mise à la terre, et un doigt de contact en forme de pétale du contact mobile de mise à la terre se déforme vers l'extérieur pour générer une pression de contact afin de garantir un contact fiable.

5. Interrupteur à trois positions selon la revendication 1, dans lequel une partie d'extrémité du siège de support isolant proche du premier doigt de contact à ressort est pourvue d'une surface en arc pour un champ électrique uniforme, et une première encoche pour le premier doigt de contact à ressort à monter est prévue.

6. Interrupteur à trois positions selon la revendication 1, dans lequel une partie d'extrémité du siège de support de mise à la terre proche du second doigt de contact à ressort est pourvue d'une surface en arc pour un champ électrique uniforme, et une seconde encoche pour le second doigt de contact à ressort à monter est prévue.

7. Interrupteur à trois positions selon la revendication 1, dans lequel une partie d'extrémité du couvercle de blindage de mise à la terre vers le siège de support de mise à la terre est pourvue d'une surface en arc pour un champ électrique uniforme.

8. Interrupteur à trois positions selon la revendication 1, dans lequel un angle aigu est formé entre l'axe du siège de support isolant et l'axe du siège de support de mise à la terre.

9. Boîte à gaz, dans laquelle l'interrupteur à trois positions selon l'une quelconque des revendications 1 à 8 est disposé dans la boîte à gaz (3),
et l'interrupteur à trois positions est fixé à une plaque avant de la boîte à gaz et disposé exactement sous un disjoncteur sous vide (1) ; et
l'axe du siège de support isolant de l'interrupteur à trois positions coïncide avec le centre d'axe d'un siège de contact isolant fixe.

10. Boîte à gaz selon la revendication 9, dans lequel une partie supérieure de la boîte à gaz est pourvue d'un disjoncteur sous vide et d'une douille de bus d'extension latérale (2) connectée, une extrémité mobile d'une chambre d'extinction d'arc sous vide (104) étant connectée électriquement à la douille de bus d'extension latérale par une liaison flexible (103),
le siège de contact isolant fixe est fixé à une extrémité fixe de la chambre d'extinction d'arc sous vide ; et
un intérieur du siège de contact isolant fixe étant connecté au contact isolant fixe en montant un doigt de contact à ressort du siège de contact isolant fixe (102).
